# EUROPEAN PATENT SPECIFICATION

(11) **EP 3 875 811 B1**
(45) Date of publication and mention of the grant of the patent: **20.08.2025**
(21) Application number: 20161636.4
(22) Date of filing: 06.03.2020
(51) Int. Cl.: F25B 41/35

(54) **EXPANSION VALVE FOR A HEATING AND/OR COOLING APPLICATION**
EXPANSIONSVENTIL FÜR EINE HEIZ- UND/ODER KÜHLANWENDUNG
VANNE D'EXPANSION POUR APPLICATION DE CHAUFFAGE ET/OU DE REFROIDISSEMENT

(43) Date of publication of application: 08.09.2021
(73) Proprietor: Danfoss A/S, 6430 Nordborg (DK)
(72) Inventor: Kristensen, Søren Sottrup, 6430 Nordborg (DK)
(74) Representative: Patentanwälte Olbricht Buchhold Keulertz

(56) References cited:
- JP-A- 2016 151 310
- JP-A- 2017 115 989

## Description

The present invention relates to an expansion valve, in particular for a heating and/or cooling application, comprising a movable plug and a valve seat, wherein the distance between the plug and the valve seat defines a valve opening. The variable valve opening defines and limits a fluid flow rate through the valve, thereby ensuring a desired pressure drop across the expansion valve.

As a fluid passes the expansion valve, vibrations of the expansion valve and/or turbulences in the fluid flow may lead to considerable and undesired noise generation by the valve. The noise may be particularly undesirable in the context of household appliances, where noise levels generally tend to be lower than in the context of e.g. industrial appliances. Conventional expansion valves are known from JP2016151310A and from JP2017115989A.

The goal of the present invention is therefore to improve expansion valves such that their acoustic emissions during operation are reduced. This goal is achieved by an expansion valve according to claim 1. Preferable embodiments of the invention are subject to the dependent claims.

According to claim 1, an expansion valve is provided, which may be designed for use in a heating and/or cooling application. The valve comprises a movable plug and a valve seat, wherein the distance between the plug and the valve seat defines a valve opening. The fluid flow through the valve is defined by the size of the valve opening and therefore by the relative positions of the plug and the valve seat.

According to the invention, the valve comprises
a seat portion extending over a first axial distance in an axial direction of a fluid conduit of the valve,
a step portion, in which the cross-sectional area of the fluid conduit increases significantly over a short second axial distance, and
a sloped portion, in which the cross-sectional area of the fluid conduit increases gradually over a longer third axial distance than at the step portion. The first axial distance of the seat portion is smaller than the third axial distance of the sloped portion.

The short seat portion combined with the step portion and the long sloped portion make it possible to direct the fluid flow through the valve such that it is concentrated in a radially inward position of the fluid conduit. At the same time and as a consequence, radially outward positions of the fluid conduit, which are in contact with the fluid conduit walls, experience less fluid flow. This means that the velocity gradient is reduced at the fluid conduit walls in certain portions of the valve, resulting in less friction and less vibrations at the fluid conduit walls. The function of the step portion is to facilitate a concentration of the fluid flow in a radially inward position, close to and around the centreline of the fluid conduit. The fluid flow past the step results in a detachment of the fluid flow from an inner edge of the seat portion. The inner edge of the seat portion may be situated close to the centreline of the fluid conduit. The detached fluid flow has less tendency to attach itself to the walls of the fluid conduit, thereby reducing the occurrence of acoustic noise.

In a preferred embodiment of the invention, the step portion extends over a shorter distance in the axial direction than the seat portion. The step portion may be the shortest of the above-mentioned three portions of the valve. The step portion may be a face portion, which is planar and/or perpendicular to the flow direction. The step portion may be a planar surface, extending in a perpendicular direction to the flow direction and/or in a radial direction of the valve. In an embodiment, in which the step portion is a planar face, the step portion may not extend in an axial direction of the valve at all. The step portion may be a surface, which directly links an inner surface of the seat portion with an inner surface of the sloped portion.

In another preferred embodiment of the invention, the seat portion extends over a distance of less than 1mm, preferably less than 0,8mm, and more preferably less than 0,6mm in the axial direction. The axial dimension of the seat portion may be selected such that an inner wall, in particular an inner cylindrical wall of the seat portion is chosen to be so short, that fluid flowing past this inner wall does not attach strongly to the inner wall. Instead, the fluid flow past the seat portion may primarily be attached to the plug reaching at least partially through the seat portion. The plug may be shaped and positioned to direct the fluid flowing past it further towards the centreline of the fluid conduit. Therefore, the shape and position of the plug may further enhance the centering of the fluid flow. According to the invention the axial extension of the seat portion corresponds to the axial distance between two opposite faces of the seat portion, wherein said faces are substantially parallel to each other.

The dimensioning and positioning of the seat portion and the step portion may be selected so as create recirculation zones downstream of the seat portion and/or of the step portion. The recirculation zones may further help to reduce the amount of noise generated by the valve. In particular, the recirculation zones may force the fluid flow to remain close to the centreline of the fluid conduit and away from the walls of the fluid conduit.

In another preferred embodiment of the invention, the radially innermost part of the seat portion is a knife-edged structure. The seat portion may therefore not comprise any cylindrically shaped fluid conduit portions, which extend over any significant axial distance. In an axial section view of the seat portion, the radially innermost part of the seat portion may be of a triangular shape, wherein one edge of the triangle points radially inwards and corresponds to the knife-edge of the knife-edge structure. A correspondingly shaped seat portion may provide even less attachment to a fluid flowing past it, thereby helping to focus the fluid flow close to the centreline of the fluid conduit.

In another embodiment which is not claimed, the sloped portion is sloped at an angle of 5° - 10°, preferably at an angle of 5° - 7,5° or the sloped portion is sloped at an angle of 10° - 20°, According to the invention the sloped portion is sloped at an angle of 12° - 16° and particularly preferable at an angle of 14° ± 1° and the sloped portion comprises a conical surface for guiding the fluid flow wherein the conical surface is directly adjacent to a circular surface of the step portion, wherein the out edge of the circular surface of the step portion corresponds to the smallest diameter section of the sloped portion.

According to the invention, the step portion comprises a hollow circular face, said hollow circular face being arranged perpendicular to the axial direction of the fluid conduit. The opening inside the circular face may communicate with the valve opening within the seat portion. Therefore, the inner edge of the circular face of the step portion corresponds to an inner edge of the seat portion.

According to the invention, the ratio of the inner diameter of the valve seat to the outer diameter of the step portion is in the range of 0,40 - 0,90, preferably in the range of 0,40 - 0,70, more preferably in the range of 0,45 - 0,65, more preferable in the range of 0,55 ± 0,05 and particularly preferable in the range of 0,55 ± 0,02 or the ratio of the inner diameter of the valve seat to the outer diameter of the step portion is preferably in the range of 0,70 - 0,90, preferably in the range of 0,80 ± 0,05 and particularly preferable in the range of 0,80 ± 0,02.

In another preferred embodiment of the invention, the ratio of a narrow end of the sloped portion to the wide end of the sloped portion is in the range of 0,40 - 0,80, preferably in the range of 0,50 - 0,70, more preferable in the range of 0,61 ± 0,05 and particularly preferable in the range of 0,61 ± 0,02..

In another preferred embodiment of the invention, the expansion valve is controlled by a stepper motor or actuator and/or the valve is a bidirectional valve.

In another preferred embodiment of the invention, the plug reaches inside the valve seat even in the fully opened position of the valve. The plug may be of an elongated shape, meaning that its length in an axial direction is more than twice its diameter at the closed valve position. The length of the plug may also be measured from the position at which the plug sits at the seat portion and closes the valve opening to the tip of the plug. The long structure of the plug may be used to further guide the fluid flow close to the centreline of the fluid conduit.

Further details and advantages of the invention are described with reference to the figures. The figures shows:
- Figure 1:: cross-sectional view of an expansion valve;
- Figures 2a-2d:: two embodiments of an expansion valves in open positions;
- Figures 3a-3d:: two embodiments of an expansion valves in closed positions;
- Figures 4a-4c:: one embodiment of an expansion valve in closed, medium and open position;
- Figures 5a-5c:: another embodiment of an expansion valve in closed, medium and open position;
- Figures 6a-6c:: another embodiment of an expansion valve in closed, medium and open position;
- Figures 7a-7c:: another embodiment of an expansion valve in closed, medium and open position;

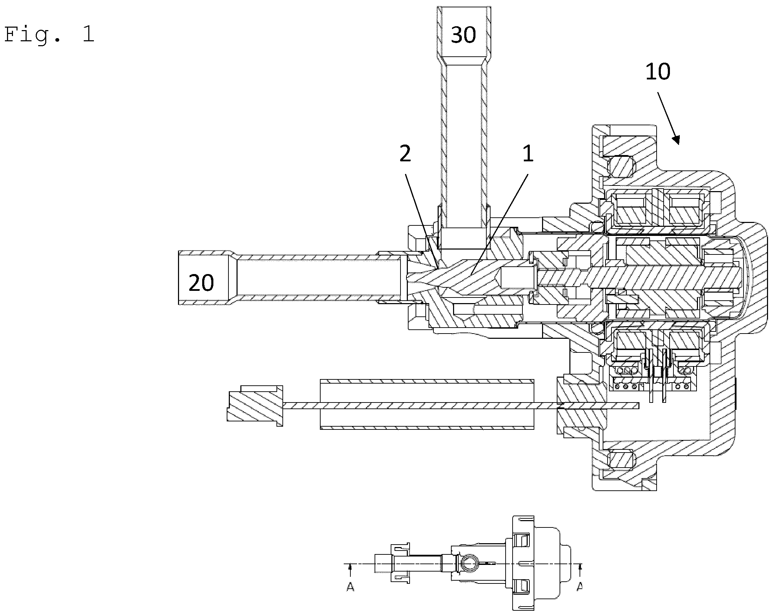

Figure 1 shows a cross-sectional view A-A of an expansion valve according to the present invention. The valve may be used in the context of e.g. a heating and/or cooling application. The valve comprises a movable plug 1 and a valve seat 2, wherein the distance between the plug 1 and the valve seat 2 defines a valve opening. The valve opening may connect two fluid conduits 20, 30, in dependence of the position of the plug 1. The expansion valve may be controlled by a stepper motor 10 or actuator and it may be a bidirectional valve.

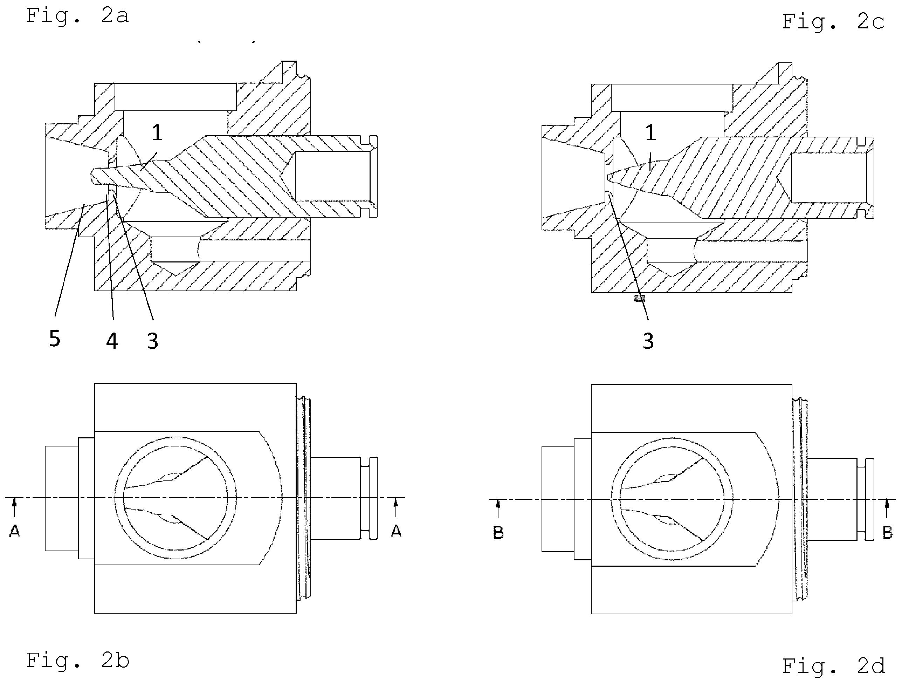

According to figures 2a to 2d, the valve comprises
a seat portion 3 extending over a first axial distance in an axial direction of a fluid conduit of the valve,
a step portion 4, in which the cross-sectional area of the fluid conduit increases significantly over a short second axial distance, and
a sloped portion 5, in which the cross-sectional area of the fluid conduit increases gradually over a longer third axial distance than at the step portion. As shown in figures 2a and 2c, the first axial distance is smaller than the third axial distance, meaning that the sloped portion 5 may extend over the longest distance in the axial direction of the valve out of the above-mentioned three portions. The axial direction of the valve may correspond to the horizontal direction in figures 2a to 2d.

Figure 2a shows a cross-sectional A-A view of an embodiment, in which the plug 1 comprises differently shaped portions and is in an open position of the valve. This means that a valve opening between the plug 1 and the seat portion 3 permits a fluid flow through the valve. The plug 1 of figure 2a may comprise one or more cylindrical portions and/or one or more conical portions, which may be positioned separate from or adjacent to each other. Figure 2b shows the corresponding plan view.

Figure 2c shows a cross-sectional B-B view of another embodiment, in which the plug 1 is shaped conically and also positioned in an open position of the valve. In particular, the portion of the plug, which enters and leaves the seat portion 3 is shown to be shaped as a regular cone. Figure 2d shows the corresponding plan view.

As can be seen from figures 2a and 2c, the step portion 4 extends over a shorter distance in the axial direction than the seat portion 1.The seat portion 3 may extend over a distance of less than 1mm, preferably less than 0,8mm, and more preferably less than 0,6mm in the axial direction. The seat portion 3 may comprise a cylindrically shaped opening portion as part of the fluid conduit in an open position of the valve and a conically shaped opening portion or valve seat 2 for accommodating the plug 1 in a closed position of the valve.

The ratio of the inner diameter of the valve seat 3 to the outer diameter of the step portion 4 is in the range of 0,40 - 0,70, preferably in the range of 0,45 - 0,65, more preferable in the range of 0,55 ± 0,05 and particularly preferable in the range of 0,55 ± 0,02 or the ratio of the inner diameter of the valve seat 3 to the outer diameter of the step portion 4 is in the range of 0,70 - 0,90, preferably in the range of 0,80 ± 0,05 and particularly preferable in the range of 0,80 ± 0,02 .

The ratio of a narrow end of the sloped portion 5 to the wide end of the sloped portion 5 is in the range of 0,40 - 0,80, preferably in the range of 0,50 - 0,70, more preferable in the range of 0,61 ± 0,05 and particularly preferable in the range of 0,61 ± 0,02.. The narrow end of the sloped portion 5 is the end close to the step portion 4, whereas the wide end of the sloped portion 5 is the opposite end.

Figure 2a shows that the plug 1 may reach inside the seat portion 3 even in a fully opened position of the valve. The plug 1 may therefore interact with the fluid flow flowing into and out of the seat portion 3 even when the valve is fully opened.

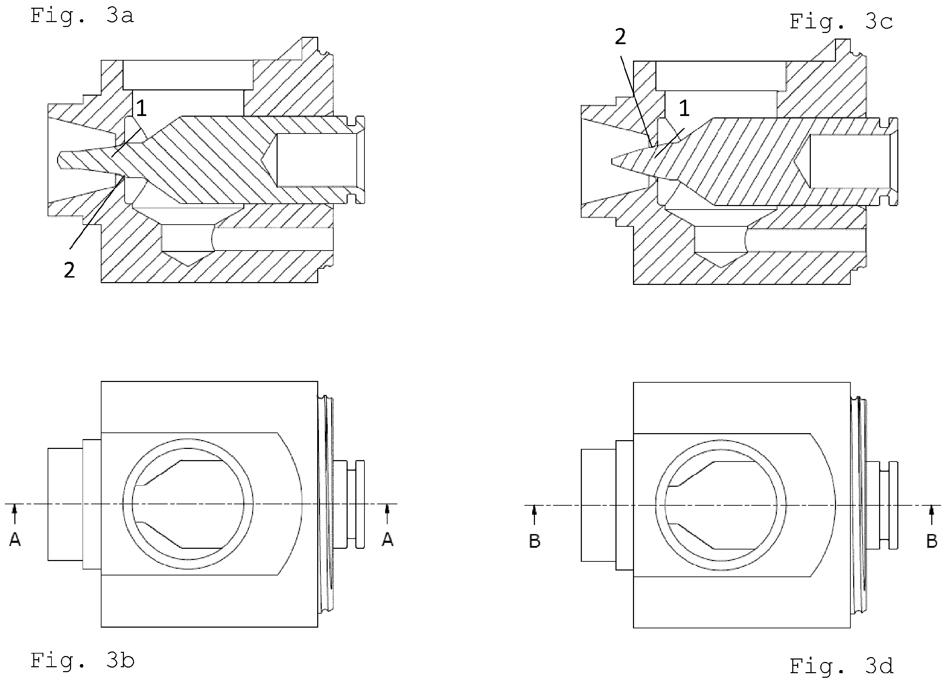

Figure 3a to 3d show the same embodiments as figures 2a to 2d, however in closed positions of the valves. Here, the plugs 1 are in their innermost positions, effectively closing any valve opening between the plugs 1 and the valve seat 2.

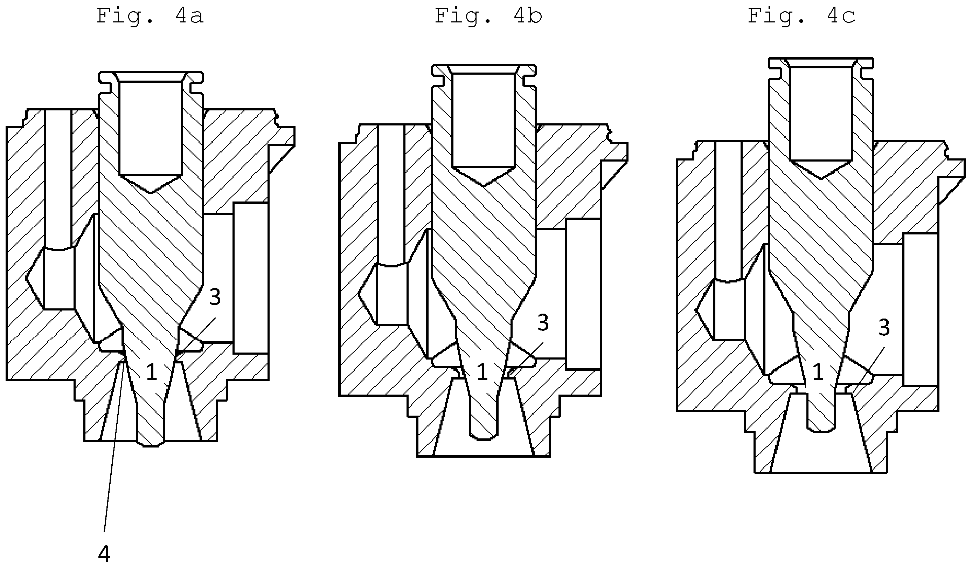

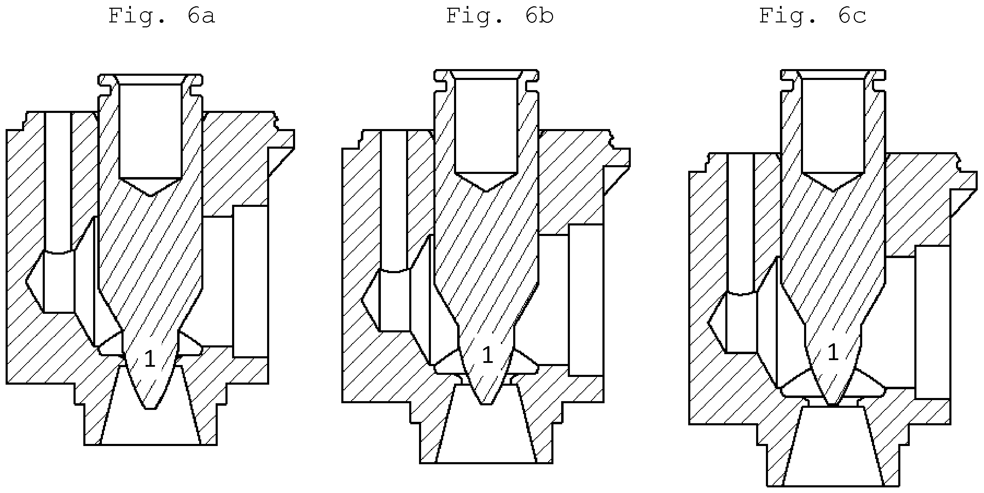

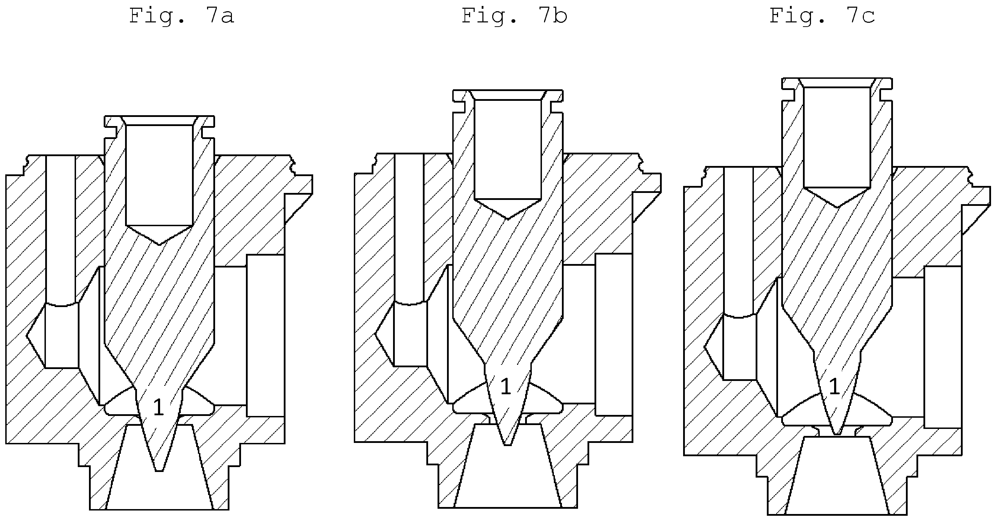

Figures 4a, b, c to 7c, b, c show different embodiments of an expansion valve in closed, medium and open positions. The main difference between the various embodiments are the shapes of the plugs 1 and the positons of plugs 1 in fully open states of the valves. As many features of figures 4a, b, c to 7c, b, c are similar or identical to each other, they will not be described for each figure individually.

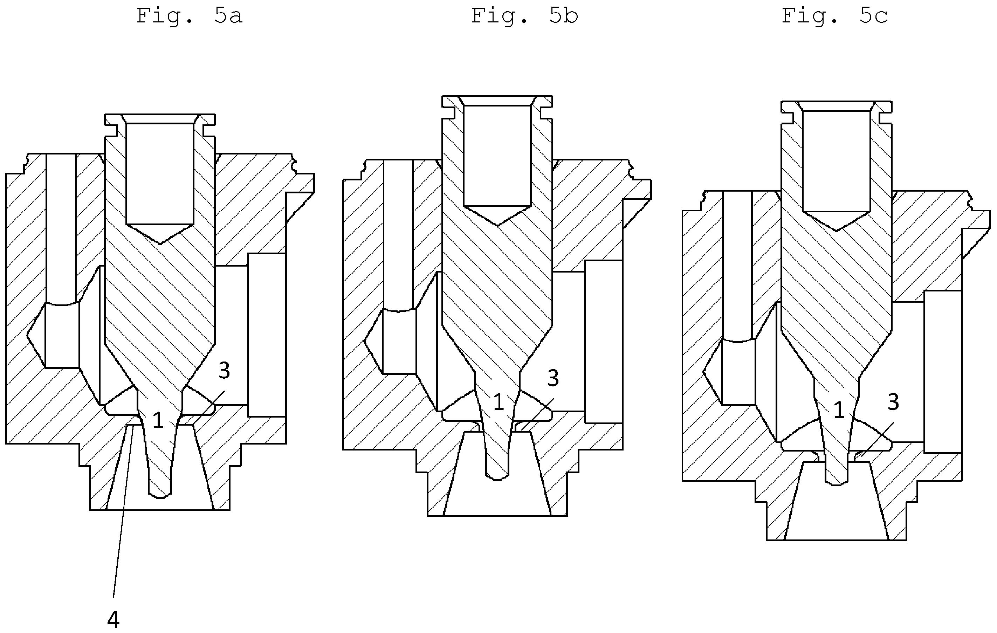

Figures 4a, b, c and 5a, b, c show plugs 1 of complex geometries, comprising cylindrical and conical portions. Figures 4a and 5a show the valves in closed positions, whereas figures 4c and 5c show the valves in fully open positions. In both figures 4c and 5c, the plug is shown to remain at least partially within the seat portion 3, even in a fully open position of the valve.

Although not shown in the figures, the radially innermost part of the seat portion 3 may be a knife-edged structure, further reducing the length over which the fluid interacts with the seat portion 3 when flowing through it. The radial direction of the present invention may correspond to the radial direction of the plug 1 as shown in figure 4a. The plug 1 may usually be a axially symmetrical body. The radial direction in Figure 4a may therefore lie in a horizontal plane, perpendicular to the drawing plane.

The sloped portion 5 shown in figures 4a, b, c to 7c, b, c may be sloped at an angle of 5° - 10°, preferably at an angle of 5° - 7,5° or the sloped portion may be sloped at an angle of 10° - 20°, preferably at an angle of 12° - 16° and particularly preferable at an angle of 14° ± 1°.

The step portion 4 shown e.g. in figure 4a comprises a hollow circular face, said hollow circular face being arranged perpendicular to the axial direction of the fluid conduit.

The invention is not limited to one of the above-described embodiments, but can be modified in many ways.

## Claims

1. Expansion valve, in particular for a heating and/or cooling application, comprising a movable plug (1) and a valve seat (2), wherein the distance between the plug (1) and the valve seat (2) defines a valve opening, wherein the valve comprises three portions arranged in consecutive order, namely
a seat portion (3) extending over a first axial distance in an axial direction of a fluid conduit of the valve,
a step portion (4), in which the cross-sectional area of the fluid conduit increases significantly over a short second axial distance, the step portion (4) comprising a hollow circular face, said hollow circular face being arranged perpendicular to the axial direction of the fluid conduit and having an opening inside, and
a sloped portion (5) with a conical surface directly adjacent to the circular face of the step portion (4), in which the cross-sectional area of the fluid conduit increases gradually over a longer third axial distance than at the step portion (4),
wherein
the axial extension of the seat portion (3) corresponds to the axial distance between two opposite and substantially parallel faces of the seat portion (3),
**characterized in that**
the first axial distance is smaller than the third axial distance,
the sloped portion (5) is sloped at an angle of 12° - 16°, and
the ratio of the inner diameter of the valve seat (2) to the outer diameter of the step portion (4) is in the range of 0,40 - 0,90.

2. Expansion valve according to claim 1, **characterized in that** the step portion (4) extends over a shorter distance in the axial direction than the seat portion (3).

3. Expansion valve according to claim 1 or 2, **characterized in that** the seat portion (3) extends over a distance of less than 1mm, preferably less than 0,8mm, and more preferably less than 0,6mm in the axial direction.

4. Expansion valve according to any of the preceding claims, **characterized in that** the radially innermost part of the seat portion (3) is a knife-edged structure.

5. Expansion valve according to any of the preceding claims, **characterized in that** the sloped portion (5) is sloped at an angle of 14° ± 1°.

6. Expansion valve according to any of the preceding claims, **characterized in that** the ratio of the inner diameter of the valve seat (2) to the outer diameter of the step portion (4) is in the range of 0,40 - 0,70, preferably in the range of 0,45 - 0,65, more preferable in the range of 0,55 ± 0,05 and particularly preferable in the range of 0,55 ± 0,02 or that the ratio of the inner diameter of the valve seat (2) to the outer diameter of the step portion (4) is in the range of 0,70 - 0,90, preferably in the range of 0,80 ± 0,05 and particularly preferable in the range of 0,80 ± 0,02.

7. Expansion valve according to any of the preceding claims, **characterized in that** the ratio of a narrow end of the sloped portion (5) to the wide end of the sloped portion (5) is in the range of 0,40 - 0,80, preferably in the range of 0,50 - 0,70, more preferable in the range of 0,61 ± 0,05 and particularly preferable in the range of 0,61 ± 0,02..

8. Expansion valve according to any of the preceding claims, **characterized in that** the expansion valve can be controlled by a stepper motor (10) or actuator and/or that the valve is a bidirectional valve.

9. Expansion valve according to any of the preceding claims, **characterized in that** the plug (1) reaches inside the valve seat (2) even in the fully opened position of the valve.

## Patentansprüche

1. Expansionsventil, insbesondere für eine Heiz- und/oder Kühlanwendung, umfassend einen beweglichen Stopfen (1) und einen Ventilsitz (2), wobei die Strecke zwischen dem Stopfen (1) und dem Ventilsitz (2) eine Ventilöffnung definiert, wobei das Ventil drei aufeinanderfolgend angeordnete Abschnitte umfasst, und zwar
einen Sitzabschnitt (3), der sich über eine erste axiale Strecke in einer axialen Richtung eines Fluidkanals des Ventils erstreckt,
einen Stufenabschnitt (4), in dem die Querschnittsfläche des Fluidkanals über eine kurze zweite axiale Strecke deutlich zunimmt, wobei der Stufenabschnitt (4) eine hohle Kreisfläche aufweist, wobei die hohle Kreisfläche senkrecht zu der axialen Richtung des Fluidkanals angeordnet ist und eine Öffnung im Inneren aufweist, und einen geneigten Abschnitt (5) mit einer konischen Oberfläche, die der kreisförmigen Fläche des Stufenabschnitts (4) direkt benachbart ist, wobei die Querschnittsfläche des Fluidkanals über eine längere dritte axiale Strecke als an dem Stufenabschnitt (4) allmählich zunimmt,
wobei
die axiale Erstreckung des Sitzabschnitts (3) der axialen Strecke zwischen zwei gegenüberliegenden und im Wesentlichen parallelen Flächen des Sitzabschnitts (3) entspricht,
**dadurch gekennzeichnet, dass**
die erste axiale Strecke kleiner als die dritte axiale Strecke ist,
der geneigte Abschnitt (5) in einem Winkel von 12° - 16° geneigt ist und
das Verhältnis des Innendurchmessers des Ventilsitzes (2) zu dem Außendurchmesser des Stufenabschnitts (4) im Bereich von 0,40 - 0,90 liegt.

2. Expansionsventil nach Anspruch 1, **dadurch gekennzeichnet, dass** sich der Stufenabschnitt (4) über eine kürzere Strecke in der axialen Richtung erstreckt als der Sitzabschnitt (3).

3. Expansionsventil nach Anspruch 1 oder 2, **dadurch gekennzeichnet, dass** sich der Sitzabschnitt (3) über eine Strecke von weniger als 1 mm, vorzugsweise weniger als 0,8 mm und besonders bevorzugt weniger als 0,6 mm in der axialen Richtung erstreckt.

4. Expansionsventil nach einem der vorhergehenden Ansprüche, **dadurch gekennzeichnet, dass** der radial innerste Teil des Sitzabschnitts (3) eine Messerkantentruktur ist.

5. Expansionsventil nach einem der vorhergehenden Ansprüche, **dadurch gekennzeichnet, dass** der geneigte Abschnitt (5) in einem Winkel von 14° ± 1° geneigt ist.

6. Expansionsventil nach einem der vorhergehenden Ansprüche, **dadurch gekennzeichnet, dass** das Verhältnis des Innendurchmessers des Ventilsitzes (2) zu dem Außendurchmesser des Stufenabschnitts (4) im Bereich von 0,40 - 0,70, vorzugsweise im Bereich von 0,45 - 0,65, weiter bevorzugt im Bereich von 0,55 ± 0,05 und besonders bevorzugt im Bereich von 0,55 ± 0,02 liegt oder dass das Verhältnis des Innendurchmessers des Ventilsitzes (2) zu dem Außendurchmesser des Stufenabschnitts (4) im Bereich von 0,70 - 0,90, bevorzugt im Bereich von 0,80 ± 0,05 und besonders bevorzugt im Bereich von 0,80 ± 0,02 liegt.

7. Expansionsventil nach einem der vorhergehenden Ansprüche, **dadurch gekennzeichnet, dass** das Verhältnis eines schmalen Endes des geneigten Abschnitts (5) zu dem breiten Ende des geneigten Abschnitts (5) im Bereich von 0,40 - 0,80, vorzugsweise im Bereich von 0,50 - 0,70, weiter bevorzugt im Bereich von 0,61 ± 0,05 und besonders bevorzugt im Bereich von 0,61 ± 0,02 liegt.

8. Expansionsventil nach einem der vorhergehenden Ansprüche, **dadurch gekennzeichnet, dass** das Expansionsventil durch einen Schrittmotor (10) oder Aktuator steuerbar ist und/oder dass das Ventil ein bidirektionales Ventil ist.

9. Expansionsventil nach einem der vorhergehenden Ansprüche, **dadurch gekennzeichnet, dass** der Stopfen (1) auch in der vollständig geöffneten Position des Ventils in den Ventilsitz (2) hineinreicht.

## Revendications

1. Vanne d'expansion, en particulier pour application de chauffage et/ou de refroidissement, comprenant un opercule mobile (1) et un siège de vanne (2), la distance entre l'opercule (1) et le siège de vanne (2) définissant une ouverture de vanne, la vanne comprenant trois parties disposées dans un ordre consécutif, à savoir
une partie siège (3) s'étendant sur une première distance axiale dans une direction axiale d'un conduit de fluide de la vanne,
une partie étagée (4), dans laquelle la section transversale du conduit de fluide augmente de manière significative sur une deuxième distance axiale courte, la partie étagée (4) comprenant une face circulaire creuse, ladite face circulaire creuse étant disposée perpendiculairement à la direction axiale du conduit de fluide et présentant une ouverture à l'intérieur, et
une partie inclinée (5) dotée d'une surface conique directement adjacente à la face circulaire de la partie étagée (4), dans laquelle la section transversale du conduit de fluide augmente progressivement sur une troisième distance axiale plus longue qu'au niveau de la partie étagée (4),
wherein
l'extension axiale de la partie siège (3) correspondant à la distance axiale entre deux faces opposées et sensiblement parallèles de la partie siège (3),
**caractérisée en ce que**
la première distance axiale est inférieure à la troisième distance axiale,
la partie inclinée (5) est inclinée selon un angle compris entre 12° et 16°, et
le rapport entre le diamètre intérieur du siège de vanne (2) et le diamètre extérieur de la partie étagée (4) est dans la plage comprise entre 0,40 et 0,90.

2. Vanne d'expansion selon la revendication 1, **caractérisée en ce que** la partie étagée (4) s'étend dans la direction axiale sur une distance plus courte que la partie siège (3).

3. Vanne d'expansion selon la revendication 1 ou 2, **caractérisée en ce que** la partie siège (3) s'étend sur une distance inférieure à 1 mm, de préférence inférieure à 0,8 mm, et de préférence encore inférieure à 0,6 mm dans la direction axiale.

4. Vanne d'expansion selon l'une quelconque des revendications précédentes, **caractérisée en ce que** la partie radialement la plus à l'intérieur de la partie siège (3) est une structure à bord tranchant.

5. Vanne d'expansion selon l'une quelconque des revendications précédentes, **caractérisée en ce que** la partie inclinée (5) est inclinée d'un angle de 14° ± 1°.

6. Vanne d'expansion selon l'une quelconque des revendications précédentes, **caractérisée en ce que** le rapport du diamètre intérieur du siège de vanne (2) sur le diamètre extérieur de la partie étagée (4) est dans la plage comprise entre 0,40 et 0,70, de préférence dans la plage comprise entre 0,45 et 0,65, de préférence encore, dans la plage de 0,55 ± 0,05 et de manière particulièrement préférée dans la plage de 0,55 ± 0,02, ou **en ce que** le rapport du diamètre intérieur du siège de vanne (2) sur le diamètre extérieur de la partie étagée (4) est dans la plage comprise entre 0,70 et 0,90, de préférence dans la plage de 0,80 ± 0,05 et de manière particulièrement préférée dans la plage de 0,80 ± 0,02.

7. Vanne d'expansion selon l'une quelconque des revendications précédentes, **caractérisée en ce que** le rapport d'une extrémité étroite de la partie inclinée (5) sur l'extrémité large de la partie inclinée (5) est dans la plage comprise entre 0,40 et 0,80, de préférence dans la plage comprise entre 0,50 et 0,70, de préférence encore dans la plage de 0,61 ± 0,05 et de manière particulièrement préférée dans la plage de 0,61 ± 0,02.

8. Vanne d'expansion selon l'une quelconque des revendications précédentes, **caractérisée en ce que** la vanne d'expansion peut être commandée par un moteur pas à pas (10) ou un actionneur et/ou **en ce que** la vanne est une vanne bidirectionnelle.

9. Vanne d'expansion selon l'une quelconque des revendications précédentes, **caractérisée en ce que** l'opercule (1) atteint à l'intérieur du siège de vanne (2) même dans la position complètement ouverte de la vanne.
